# EUROPÄISCHE PATENTSCHRIFT

(11) **EP 3 127 656 B1**
(45) Veröffentlichungstag und Bekanntmachung des Hinweises auf die Patenterteilung: **13.06.2018**
(21) Anmeldenummer: 16180799.5
(22) Anmeldetag: 22.07.2016
(51) Int. Cl.: B24B 39/00, B23C 5/20, B23B 27/14

(54) **PRESSPOLIERWERKZEUG UND VERFAHREN ZUM HERSTELLEN EINES PRESSPOLIERWERKZEUGS**
PRESS POLISHING TOOL AND METHOD FOR PRODUCING A PRESS POLISHING TOOL
OUTIL DE POLISSAGE PAR PRESSION ET PROCEDE DE FABRICATION D'UN OUTIL DE POLISSAGE PAR PRESSION

(30) Priorität: 06.08.2015 DE 102015112945
(43) Veröffentlichungstag der Anmeldung: 08.02.2017
(73) Patentinhaber: Mössner GmbH Diamantenwerkzeugfabrik, 75179 Pforzheim (DE)
(72) Erfinder: Feuchter, Hans-Peter, 75181 Pforzheim (DE)
(74) Vertreter: Twelmeier Mommer & Partner

(56) Entgegenhaltungen:
- DE-A1-102006 053 330
- DE-A1-102013 206 497

## Beschreibung

Die Erfindung betrifft ein Presspolierwerkzeug und ein Verfahren zum Herstellen eines Presspolierwerkzeugs. Ein Presspolierwerkzeug mit den im Oberbegriff des Anspruchs 1 angegebenen Merkmalen ist aus DE 10 2006 053 330 A1 bekannt.

Beim Presspolieren werden Erhebungen auf der Oberfläche eines zu bearbeitenden Werkstücks plastisch oder teilplastisch verformt und so eingeebnet. Eine Glättung der Oberfläche wird beim Presspolieren also erreicht, indem Erhebungen plattgedrückt werden, während Erhebungen bei anderen Polierverfahren abgetragen werden. Ein Presspolierwerkzeug ist beispielsweise in der DE 934 747 B beschrieben.

Metallteile werden häufig mit sehr geringen Fertigungstoleranzen von wenigen Mikrometern hergestellt, indem diese zunächst durch Drehen oder Fräsen in eine gewünschte Form gebracht und anschließend poliert werden. Der mit dem Polieren verbundene Aufwand ist hoch. Dies gilt insbesondere für Oberflächen die schwer zugänglich sind, wie beispielsweise die Innenflächen von Rohren.

Aufgabe der vorliegenden Erfindung ist es ein Presspolierwerkzeug zu schaffen, welches den mit dem Polieren von Metallteilen verbundenen Aufwand reduziert.

Diese Aufgabe wird durch ein Presspolierwerkzeug mit den im Anspruch 1 angegebenen Merkmalen sowie durch ein Verfahren gemäß Anspruch 10 gelöst. Vorteilhafte Weiterbildungen der Erfindung sind Gegenstand von Unteransprüchen.

Ein erfindungsgemäßes Presspolierwerkzeug hat einen Körper in Form einer Platte, die eine Oberseite, eine Unterseite und Seitenflächen, welche die Oberseite mit der Unterseite verbinden, aufweist. An einer dieser Seitenflächen ist ein Presspolierelement, beispielsweise aus Diamant oder kubischem Bornitrid, angebracht. Ein erfindungsgemäßes Presspolierwerkzeug kann aus einer Wendeschneidplatte hergestellt werden, indem eine von einer Ecke an ihrer Oberseite zur ihrer Unterseite verlaufende Seitenkante abgeflacht und auf die dadurch geschaffene Seitenfläche ein Presspolierelement gesetzt wird. Bei dieser Ecke an der Oberseite der Platte handelt es sich bevorzugt um eine Schneidenecke.

Ein wichtiger Vorteil eines erfindungsgemäßen Presspolierwerkzeugs ist, dass es in Werkzeughalter von Wendeschneidplatten passt. Wendeschneidplatten sind zur Bearbeitung von Metallteilen gebräuchlich. Entsprechend Werkzeughalter und Maschinen sind deshalb in metallverarbeitenden Betrieben in der Regel vorhanden. Diese Maschinen, mit denen das Personal in den Betrieben vertraut ist, können mit einem erfindungsgemäßen Presspolierwerkzeug auch zum Polieren eingesetzt werden, so dass sich Kosten einsparen lassen.

Das Presspolierelement kann vor oder nach dem Anbringen an der Seitenfläche der Platte durch Schleifen abgerundet werden. Bevorzugt wird das Presspolierelement nach dem Anbringen an der Seitenfläche der Platte in Form geschliffen. Bei dem fertigen Presspolierwerkzeug hat das Presspolierelement bevorzugt eine ballige Arbeitsfläche. In jeder Schnittansicht des Presspolierelements mit einer senkrecht zu der das Presspolierelement tragenden Seitenfläche ist das von dieser Seitenfläche abgewandet Ende des Presspolierelements dann also konvex gerundet. Beispielsweise kann die Arbeitsfläche des Presspolierelements kalottenförmig sein. Anstelle eines Kugelsegments kann die Arbeitsfläche des Presspolierelements beispielsweise auch die Form eines Ellipsensegments oder einen parabelförmigen Querschnitt haben. Als Arbeitsfläche wird der Teil der Oberfläche des Presspolierelements bezeichnet, der beim Polieren die zu glättenden Werkstücke berührt.

Bevorzugt hat das Presspolierelement einen Fuß in Form eines Kegelstumpfs, der auf der Seitenfläche des Körpers sitzt. Dieser Fuß geht über in eine Kugelkalotte, deren Oberfläche beim Presspolieren an einem zu glättenden Werkstück anliegt und somit die Arbeitsfläche bildet.

Ein erfindungsgemäßes Presspolierwerkzeug kann an mehreren Seitenflächen des plattenförmigen Körpers ein Presspolierelement aufweisen. Bevorzugt weist das Presspolierwerkzeug aber nur einen einzigen Diamanten auf.

Eine vorteilhafte Weiterbildung der Erfindung sieht vor, dass das Presspolierelement ein monokristalliner Diamant ist. Polykristalline Diamanten können an sich auch verwendet werden, sind aber weniger gut zum Polieren geeignet.

Das Presspolierelement kann auf einer plan ausgebildeten Seitenfläche des Plattenförmigen Körpers beispielsweise durch Löten befestigt werden. Eine andere Möglichkeit besteht darin, dass das Presspolierelement in einer Vertiefung der Seitenfläche sitzt.

Weitere Einzelheiten und Vorteile der Erfindung werden an Ausführungsbeispielen unter Bezugnahme auf die beigefügten Zeichnungen erläutert. Gleiche und einander entsprechende Komponenten sind darin mit übereinstimmenden Bezugszeichen versehen. Es zeigen:
- Fig. 1: ein Ausführungsbeispiel eines erfindungsgemäßen Presspolierwerkzeugs in einer Draufsicht;
- Fig. 2: eine Seitenansicht des Ausführungsbeispiel;
- Fig. 3: eine weitere Seitenansicht des Ausführungsbeispiels;
- Fig. 4: ein weiteres Ausführungsbeispiel eines erfindungsgemäßen Presspolierwerkzeugs in einer Draufsicht,
- Fig. 5: eine Seitenansicht des Ausführungsbeispiels von Fig. 4;
- Fig. 6: eine weitere Seitenansicht des Ausführungsbeispiels von Fig. 4;
- Fig. 7: ein weiteres Ausführungsbeispiel eines erfindungsgemäßen Presspolierwerkzeugs in einer Draufsicht; und
- Fig. 8: eine Seitenansicht des Ausführungsbeispiels von Fig. 7;
- Fig. 9: eine weitere Seitenansicht des Ausführungsbeispiels von Fig. 7.

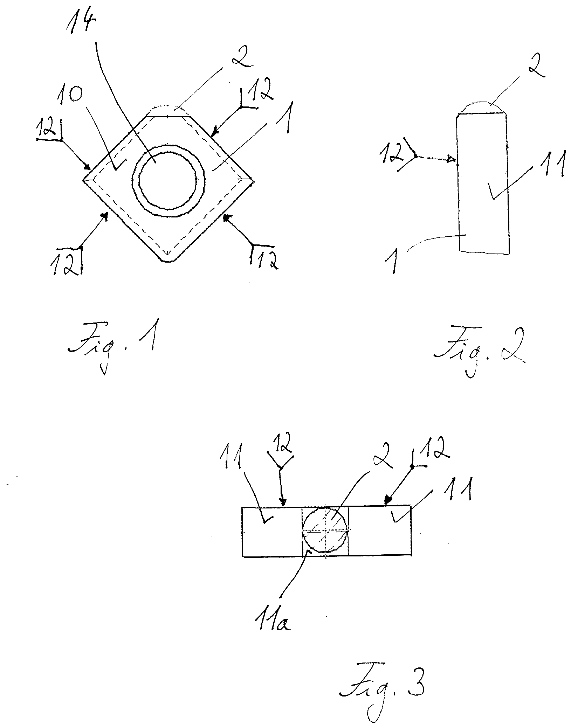

In den Figuren 1 bis 3 ist ein Presspolierwerkzeug dargestellt, das einen plattenförmigen Körper 1 aus Metall oder Keramik und ein Presspolierelement 2 aufweist. Das Presspolierelement 2 kann beispielsweise aus kubischem Bornitrid oder Diamant bestehen. Bevorzugt ist das Presspolierelement 2 ein Monokristalldiamant.

Der Körper 1 hat eine Oberseite 10, die in Fig. 1 gezeigt ist, eine nicht gezeigte Unterseite und Seitenflächen 11, welche die Oberseite 10 mit der Unterseite verbinden. Als Körper 1 kann eine Wendeschneidplatte verwendet werden, bei welcher eine von einer Ecke der Oberseite 10 zu der Unterseite verlaufende Seitenkante abgeflacht wurde, beispielsweise abgeschliffen wurde. An der dadurch gebildeten Seitenfläche 11a wird das Presspolierelement 2 befestigt.

Die Oberseite 10 des Körpers 1 weist an ihrem Rand Hauptkanten 12 auf. Wenn das Presspolierwerkzeug aus einer Wendeschneidplatte hergestellt wird, handelt es sich bei den Hauptkanten 12 um die Schneidkanten der Wendeschneidplatte. Die das Presspolierelement 2 tragende Seitenfläche 11a grenzt an die Oberseite 10 zwischen zwei benachbarten Hauptkanten 12 an. Die Kante, die sowohl zwischen der das Presspolierelement 2 tragenden Seitenfläche 11a und der Oberseite 10 als auch zwischen den benachbarten Hauptkanten 12 ist, wird im Folgenden als Nebenkante bezeichnet. Diese Nebenkante und die Hauptkanten 12 können zusammen den gesamten Umfang der Oberseite 10 bilden. Die Hauptkanten 12 machen zusammen also den größten Teil des Umfangs der Oberseite 10 aus.

Bei dem gezeigten Ausführungsbeispiel haben der Körper 1 bzw. die dafür verwendete Wendeschneidplatte eine quadratische Grundform und dementsprechend vier Hauptkanten 12. Der Körper 1 bzw. die Wendeschneidplatte können aber auch irgendeine andere Grundform, beispielsweise eine dreieckige, fünfeckige, sechseckige, rechteckige oder rautenförmige Grundform haben und eine entsprechende Anzahl von Hauptkanten 12 aufweisen. Um die Montage des Presspolierwerkzeugs an einem Werkzeughalters zu erleichtern, kann der Körper 1 des Presspolierwerkzeugs eine Bohrung 14 aufweisen

Die Unterseite des Körpers 1 kann kleiner als die Oberseite 10 sein. Bevorzugt schließen die an die Hauptkanten 12 angrenzende Seitenflächen 11 mit der Oberseite 10 einen spitzen Winkel und mit der Unterseite einen stumpfen Winkel ein. Die das Presspolierelement 2 tragende Seitenfläche 11a kann mit der Oberseite 10 einen rechten Winkel, einen spitzen Winkel oder einen stumpfen Winkel einschließen. Bevorzugt ist der Winkel, den die das Presspolierelement 2 tragende Seitenfläche 11a mit der Oberseite 10 einschließt, größer als der Winkel, den benachbarte Seitenflächen 11 mit der Oberseite 10 einschließen.

Das Presspolierelement 2 kann eine Arbeitsfläche in Form einer Kalotte haben, also eine kugelförmige Wölbung aufweisen, mit der es beim Polieren an einer zu glättenden Oberfläche eines Werkstücks anliegt. Das Presspolierelement 2 kann vor dem Befestigen an dem Körper 1 in Form geschliffen werden. Bevorzugt wird das Presspolierelement 2 aber erst an dem Körper 1 angebracht und danach in Form geschliffen.

Das Presspolierelement 2 kann mittig zwischen der Oberseite 10 und der Unterseite des Körpers 1 angeordnet sein. Es ist aber auch möglich, das Presspolierelement 2 näher an der Oberseite des Körpers 1 als an dessen Unterseite anzuordnen. In diesem Fall kann es günstig sein, wenn die Seitenfläche 11a des Körpers 1, die das Presspolierelement 2 trägt, aus einer unteren Teilfläche, die an die Unterseite angrenzt, und einer oberen Teilfläche, die an die Oberseite 10 angrenzt und das Presspolierelement 2 trägt, besteht, wobei die obere Teilfläche und die untere Teilfläche einen stumpfen Winkel einschließen.

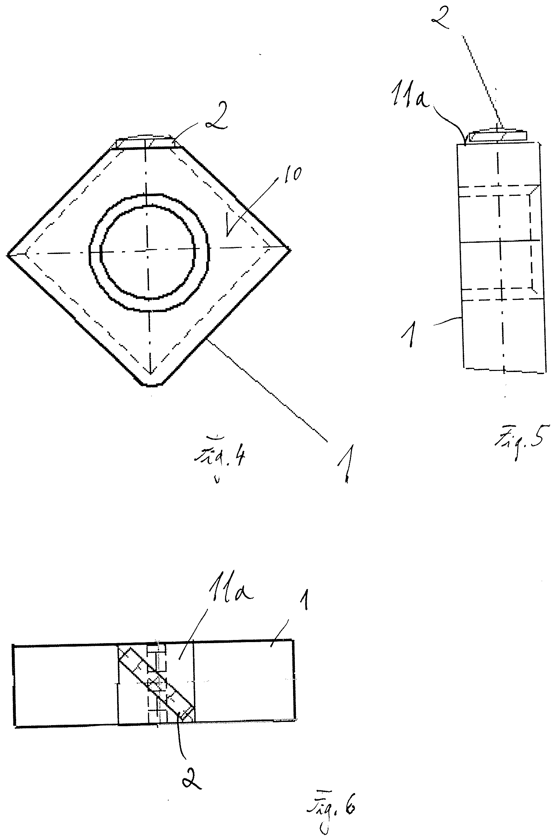

In den Figuren 4 bis 6 ist ein weiteres Ausführungsbeispiel eines Presspolierwerkzeugs dargestellt, das einen plattenförmigen Körper 1 aus Metall oder Keramik und ein Presspolierelement 2 aufweist, das beispielsweise aus kubischem Bornitrid oder Diamant bestehen kann.

Das Ausführungsbeispiel der Figuren 4 bis 6 unterscheidet sich von dem Ausführungsbeispiel der Figuren 1 bis 3 im Wesentlichen nur in der Ausgestaltung des Presspolierelements 2. Die Arbeitsfläche des Presspolierelements 2 hat bei diesem Ausführungsbeispiel die Form eines gewölbten Streifens. Beispielsweise kann die streifenförmige Arbeitsfläche ein streifenförmiger Ausschnitt einer Kalotte sein. Das streifenförmige Presspolierelement 2 kann unterschiedlicher Weise an der Seitenfläche 11a des Presspolierelements 2 angeordnet sein. Beispielsweise kann die Längsrichtung des streifenförmigen Presspolierelements 2 schräg von der Oberseite 10 zur Unterseite des Körpers 1 verlaufen oder senkrecht zur Oberseite 10 bzw. der Unterseite des Körpers 1 orientiert sein. In Fig. 6 sind schematisch diese beiden Orientierungen des Presspolierelements 2 dargestellt.

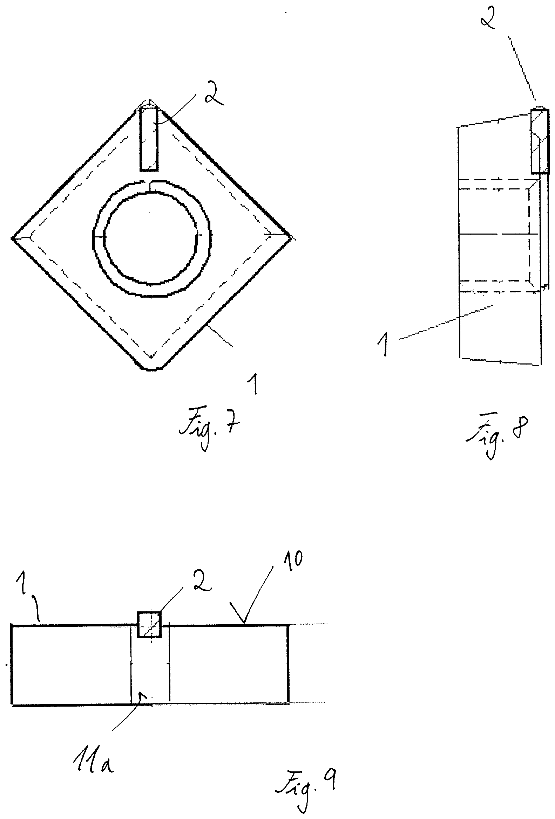

Die Figuren 7 bis 9 zeigen ein weiteres Ausführungsbeispiel eines erfindungsgemäßen Presspolierwerkzeugs. Dieses Ausführungsbeispiel unterscheidet sich von den vorstehend beschriebenen Ausführungsbeispielen im Wesentlichen dadurch, dass das Presspolierelement 2 am Rand einer der Seitenflächen 11a des Körpers 1 angeordnet ist. Das Presspolierelement 2 ist in diesem Ausführungsbeispiel als ein Stift ausgebildet, der beispielsweise in eine Nut an der Oberseite 10 des Körpers 1 eingesetzt sein kann, so dass die Arbeitsfläche des Presspolierelements 2 an einer der Seitenflächen 11a des Körpers 1 angeordnet ist. Die Arbeitsfläche des Presspolierelements 2 kann ebenfalls eine kugelförmige Wölbung sein, beispielsweise die Form einer Kalotte haben.

### Bezugszeichenliste

- 1: Körper
- 2: Presspolierelement
- 10: Oberseite
- 11: Seitenfläche
- 11a: Presspolierelement tragende Seitenfläche
- 12: Hauptkante
- 14: Bohrung

## Patentansprüche

1. Presspolierwerkzeug zum Einsetzen in einen für eine Wendeschneidplatte passenden Werkzeughalter, mit
einem Körper (1) in Form einer Platte, die eine Oberseite (10), eine Unterseite und Seitenflächen (11, 11a), welche die Oberseite (10) mit der Unterseite verbinden, aufweist,
und einem Presspolierelement (2), das an einer der Seitenflächen (11a) angegeordnet ist, **dadurch gekennzeichnet, dass**
das Presspolierwerkzeug aus einer Wendeschneidplatte hergestellt wurde, indem eine von einer Ecke zu der Unterseite verlaufende Seitenkante abgetragen und dann dort das Presspolierelement (2) angeordnet wurde.

2. Presspolierwerkzeug nach Anspruch 1, **dadurch gekennzeichnet, dass** die Oberseite (10) an ihrem Rand wenigstens drei geradlinige Hauptkanten (12) aufweist, die zusammen den größten Teil des Umfangs der Oberseite (10) ausmachen, und dass die das Presspolierelement (2) tragende Seitenfläche (11a) an die Oberseite (10) zwischen zwei benachbarten Hauptkanten (12) angrenzt.

3. Presspolierwerkzeug nach Anspruch 2, **dadurch gekennzeichnet, dass** an die Hauptkanten (12) angrenzende Seitenflächen (11) mit der Oberseite (10) einen spitzen Winkel und mit der Unterseite einen stumpfen Winkel einschließen.

4. Presspolierwerkzeug nach einem der vorstehenden Ansprüche, **dadurch gekennzeichnet, dass** der Körper (1) nur einen einziges Presspolierelement (2) trägt.

5. Presspolierwerkzeug nach einem der vorstehenden Ansprüche, **dadurch gekennzeichnet, dass** die Unterseite kleiner als die Oberseite (10) ist.

6. Presspolierwerkzeug nach einem der vorstehenden Ansprüche, **dadurch gekennzeichnet, dass** das Presspolierelement (2) aus kubischem Bornitrid oder Diamant ist.

7. Presspolierwerkzeug nach einem der vorstehenden Ansprüche, **dadurch gekennzeichnet, dass** das Presspolierelement (2) ein Monokristalldiamant ist.

8. Presspolierwerkzeug nach einem der vorstehenden Ansprüche, **dadurch gekennzeichnet, dass** das Presspolierelement (2) eine konvex gerundete Arbeitsfläche aufweist, vorzugsweise eine kalottenförmige Arbeitsfläche aufweist.

9. Presspolierwerkzeug nach Anspruch 8, **dadurch gekennzeichnet, dass** das Presspolierelement (2) einen Fuß in Form eines Kegelstumpfs aufweist, der an das kalottenförmige Ende angrenzt.

10. Verfahren zum Herstellen eines Presspolierwerkzeugs unter Verwendung einer Wendeschneidplatte, die eine Oberseite (10), an deren Rand mehrere Schneidkanten (12) sind, eine Unterseite und mehrere Ecken, in denen jeweils zwei Schneidkanten (12) zusammenlaufen, aufweist, wobei eine von einer der Ecken zur Unterseite der Wendeschneidplatte verlaufende Seitenkante abgetragen und dann dort ein Presspolierelement (2) angeordnet wird.

## Claims

1. Press polishing tool for insertion into a tool holder fitting an indexable insert, comprising:
a body (1) in the form of a plate, which has an upper side (10), a lower side and lateral surfaces (11, 11a) connecting the upper side (10) to the lower side; and
a press polishing element (2), which is arranged on one of the lateral surfaces (11a), **characterized in that**
the press polishing tool was produced from an indexable insert by removing a lateral edge extending from one corner to the lower side and arranging the Press polishing element (2) there.

2. The press polishing tool according to claim 1, **characterized in that** the upper side (10), on the rim thereof, comprises at least three rectilinear main edges (12), which together account for the majority of the circumference of the upper side (10), and the lateral surface (11a) carrying the Press polishing element (2) abuts the upper side (10) between two adjoining main edges (12).

3. The press polishing tool according to claim 2, **characterized in that** lateral surfaces (12) abutting the main edges (12) enclose an acute angle with the upper side (10), and an obtuse angle with the lower side.

4. The press polishing tool according to any one of the preceding claims, **characterized in that** the body (1) carries only a single press polishing element (2).

5. The press polishing tool according to any one of the preceding claims, **characterized in that** the lower side is smaller than the upper side (10).

6. The press polishing tool according to any one of the preceding claims, **characterized in that** the press polishing element (2) is made of cubic boron nitride or diamond.

7. The press polishing tool according to any one of the preceding claims, **characterized in that** the press polishing element (2) is a monocrystalline diamond.

8. The press polishing tool according to any one of the preceding claims, **characterized in that** the press polishing element (2) comprises a convexly curved working surface, and preferably a dome-shaped working surface.

9. The press polishing tool according to claim 8, **characterized in that** the press polishing element (2) comprises a base in the shape of a truncated cone, which abuts the dome-shaped end.

10. A method for producing a press polishing tool using an indexing plate, which comprises an upper side (10), including a plurality of cutting edges (12) on the rim thereof, a lower side and a plurality of corners, in which two respective cutting edges (12) converge, wherein a side edge extending from one of the corners to the lower side of the indexing plate is removed, and the Press polishing element (2) is then arranged there.

## Revendications

1. Outil de polissage par pression destiné à être inséré dans un porte-outil adapté pour une plaquette de coupe amovible, avec
un corps (1) sous la forme d'une plaque qui présente une face supérieure (10), une face inférieure et des faces latérales (11, 11a), lesquelles relient la face supérieure (10) avec la face inférieure,
et un élément de polissage par pression (2) qui est disposé sur l'une des faces latérales (11a), **caractérisé en ce que**
l'outil de polissage par pression a été fabriqué à partir d'une plaquette de coupe amovible, **en ce qu'**une arête latérale s'étendant vers á partir d'un coin vers la face inférieure a été enlevé et qu'ensuite l'élément de polissage par pression (2) a été disposé à cet endroit.

2. Outil de polissage par pression selon la revendication 1, **caractérisé en ce que** la face supérieure (10) présente sur son bord au moins trois arêtes principales (12) rectilignes, qui constituent ensemble la plus grande partie de La circonférence de la face supérieure (10) et que la surface latérale (11a) supportant l'élément de polissage par pression (2) est limitrophe avec la face supérieure (10) entre deux arêtes principales (12) voisines.

3. Outil de polissage par pression selon la revendication 2, **caractérisé en ce que** les surfaces latérales (11) limitrophes avec les arêtes principales (12) forment un angle aigu avec la face supérieure (10) et un angle obtus avec la face inférieure.

4. Outil de polissage par pression selon l'une des revendications précédentes, **caractérisé en ce que** le corps (1) ne porte qu'un seul élément de polissage par pression (2).

5. Outil de polissage par pression selon l'une des revendications précédentes, **caractérisé en ce que** la face inférieure est plus petite que la face supérieure (10).

6. Outil de polissage par pression selon l'une des revendications précédentes, **caractérisé en ce que** l'élément de polissage par pression (2) est à base d'un boronitrure cubique ou de diamant.

7. Outil de polissage par pression selon l'une des revendications précédentes, **caractérisé en ce que** l'élément de polissage par pression (2) est un diamant monocristallin.

8. Outil de polissage par pression selon l'une des revendications précédentes, **caractérisé en ce que** l'élément de polissage par pression (2) présente une surface de travail arrondie convexe, de préférence présente une surface de travail en forme de calotte.

9. Outil de polissage par pression selon la revendication 8, **caractérisé en ce que** l'élément de polissage par pression (2) présente un pied en forme de cône tronqué qui est limitrophe de l'extrémité en forme de calotte.

10. Procédé de fabrication d'un outil de polissage par pression moyennant l'emploi d'une plaquette de coupe amovible qui présente une face supérieure (10) au bord de laquelle se trouvent plusieurs arêtes de coupe (12), une face inférieure et plusieurs coins, au niveau desquels chaque fois deux arêtes de coupe (12) se joignent, où une arête latérale s'étendant à partir de l'un des coins vers la face inférieure de la plaquette de coupe amovible est enlevée et qu'ensuite un élément de polissage par pression (2) est disposé à cet endroit.
